# FASCICULE DE BREVET EUROPEEN

(11) **EP 0 703 481 B1**
(45) Date de publication et mention de la délivrance du brevet: **06.05.1999**
(21) Numéro de dépôt: 95402141.6
(22) Date de dépôt: 22.09.1995
(51) Int. Cl.: G02B 23/08, G02B 23/12

(54) **Episcope jour-nuit**
Tag-Nacht Episkop
Day-night episcope

(30) Priorité: 23.09.1994 FR 9411394
(43) Date de publication de la demande: 27.03.1996
(73) Titulaire: SOPELEM-SOFRETEC, Société dite:, F-95870 Bezons (FR)
(72) Inventeur: Saint-Sevin, Michel, F-93220 Gagny (FR)
(74) Mandataire: Michelet, Alain

(56) Documents cités:
- EP-A- 0 428 955
- US-A- 4 110 011

## Description

La présente invention concerne un épiscope jour-nuit permettant la conduite d'un char comportant un blindage.

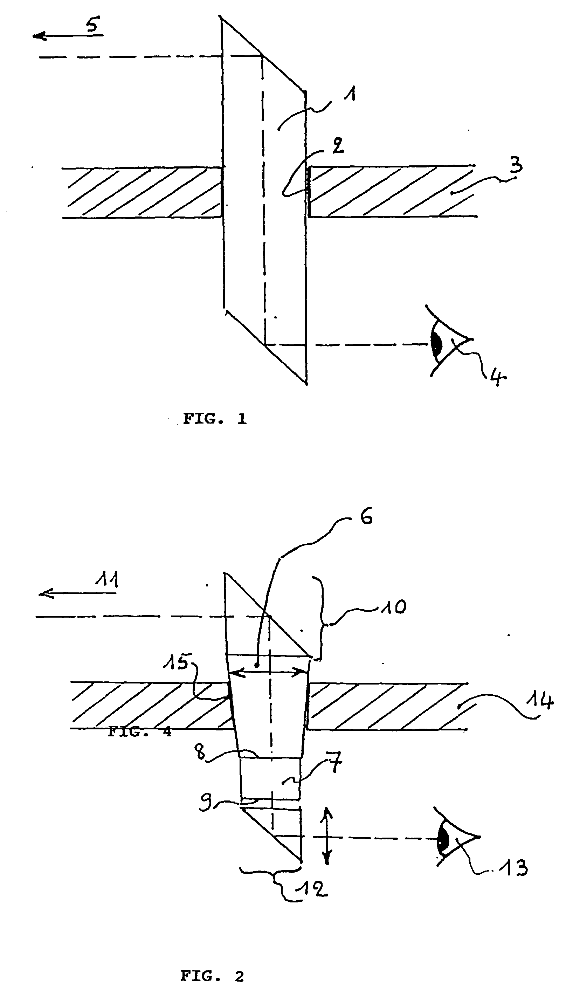

Les épiscopes de conduite de jour de char sont généralement constitués d'un prisme rhomboèdre traversant le blindage sous lequel se trouve le poste de pilotage. L'axe-objet de ce système optique est horizontal et extérieur au blindage et l'axe-image est également horizontal, mais bien entendu à l'intérieur du blindage, au niveau des yeux du conducteur. Le champ de ces épiscopes est limité par sa section, c'est-à-dire par les dimensions de leur trou de positionnement dans le blindage (Figure 1).

Les épiscopes de conduite de nuit comportent généralement un tube intensificateur de lumière et un objectif dont l'axe est coudé et qui forme une image du paysage sur la photocathode de ce tube intensificateur de lumière, dont l'écran est observé au moyen d'un système optique dont l'axe est lui aussi coudé et qui est généralement un binoculaire (Figure 2).

Il a été également envisagé de réaliser des épiscopes de conduite de nuit à capteur intensificateur de lumière-matriciel résultant de l'association d'un tube intensificateur de lumière et d'un capteur matriciel de lecture, par exemple CCD (Charge Coupled Device). Dans ce type d'épiscope de nuit, un objectif forme l'image du paysage sur un tube intensificateur de lumière. L'image intensifiée fournie par l'écran du tube est alors formée sur un capteur matriciel. Les signaux fournis par cette matrice peuvent être transmis à distance et observés sur un écran de visualisation par un système optique approprié, par exemple par un binoculaire, ou même directement sur un écran de grande taille.

Pendant longtemps, le conducteur du char a disposé de deux épiscopes, un épiscope de jour et un épiscope de nuit, et il lui était nécessaire de les interchanger matin et soir. Outre les difficultés présentées par ces manipulations, elles ne permettent bien entendu pas de conserver l'étanchéité du véhicule vis-à-vis d'une ambiance extérieure, éventuellement contaminée.

Un premier type d'épiscope de conduite jour-nuit intègre dans la même mécanique, pratiquement côte-à-côte, un épiscope de conduite de jour et un épiscope de conduite de nuit. Ces épiscopes évitent les manipulations journalières mentionnées plus haut, mais sont encombrants puisque les dimensions du trou de positionnement dans le blindage limitent à la fois le champ de l'épiscope de jour et le champ de l'épiscope de nuit, et que la surface du passage de blindage doit donc être pratiquement le double de celle nécessaire à un seul épiscope.

Ainsi, cette disposition amène soit à limiter les champs couverts dans l'un et l'autre cas, soit à prévoir des passages de blindage très importants et dans certains cas, il est même nécessaire, en raison de l'importance des superstructures du char, de renoncer à ce type de dispositif.

Dans un deuxième type de réalisation d'épiscope jour-nuit, il a été envisagé d'associer, à un épiscope de nuit comportant un capteur intensificateur de lumière matriciel, une deuxième matrice sur laquelle l'image du paysage de jour est formée, par exemple par un deuxième objectif. Toutefois, ces épiscopes jour-nuit ne permettent pas l'observation traditionnelle d'une image directe du paysage, même en position jour, alors que la possibilité d'une telle observation d'image est nécessaire, car elle est facile à interpréter et toujours disponible, même en cas de panne électrique.

Le document EP-A-428.955 décrit un dispositif de surveillance panoramique à partir d'un objet fermé, notamment d'un véhicule de combat, comportant un dispositif de vue panoramique de jour et un ensemble de capteurs montés tournant tout azimut et destiné à la prise de vue nocturne. L'ensemble des capteurs de vue nocturne produit des signaux électriques transmis par câble à travers la paroi de l'objet ou du véhicule de combat et fournissent une image sur un écran à l'intérieur de l'objet ou du véhicule de combat.

Le but de l'invention est de proposer un épiscope de conduite jour-nuit pour char qui permet, le jour, la formation d'une image directe du paysage et assure une vision de nuit, sans nécessiter une augmentation des dimensions du trou de positionnement de l'épiscope dans le blindage, à champs égaux, par rapport à un épiscope de jour simple.

C'est un autre but de l'invention de permettre la modernisation de char préexistant en remplaçant leur épiscope de jour d'origine par un épiscope jour-nuit, sans que la retouche de leur blindage ne soit nécessaire.

A cet effet, l'invention concerne un épiscope jour-nuit de conduite d'un char conforme à la revendication 1.

Dans différents modes de réalisation, l'invention comporte de plus les caractéristiques suivantes selon toutes leurs combinaisons techniquement possibles :
- le module de visualisation de l'épiscope de nuit comporte un tube vertical formant une image à l'infini dans une direction approximativement horizontale, au moyen d'un système optique comprenant un prisme ;
- il comprend une lame semi-transparente superposant les images formées, respectivement par l'épiscope de jour et par l'épiscope de nuit ;
- il comprend un miroir basculant permettant, selon sa position, l'observation par le conducteur, soit de l'image formée par l'épiscope de jour, soit de l'image formée par l'épiscope de nuit ;
- le module de prise de vue de l'épiscope de nuit comporte en outre une caméra thermique extérieure au blindage et reliée au module de visualisation par un câble électrique ;
- le module de prise de vue est équipé d'un objectif à focale variable ;
- plusieurs modules de visualisation sont reliés au module de prise de vue ;
- un module de commande permet d'actionner le module de prise de vue depuis le module de visualisation.

Un mode de réalisation préféré de l'invention sera décrit ci-après, en référence aux dessins annexés, dans lesquels :
- la Figure 1 est une représentation schématique d'un épiscope de conduite de jour traditionnel selon l'art antérieur ;
- la Figure 2 est une représentation d'un épiscope de conduite de nuit à tube intensificateur de lumière selon l'art antérieur ;
- la Figure 3 est une représentation schématique d'après le mode de réalisation de l'épiscope de conduite jour-nuit selon l'invention ;
- la Figure 4 est une représentation de l'épiscope de conduite jour-nuit selon l'invention dans un deuxième mode de réalisation.

Sur la Figure 1, le prisme rhomboèdre 1 passant au travers du trou 2 du blindage 3 permet, à l'observateur 4 symbolisé par son oeil, d'observer le paysage situé dans la direction 5. Il est bien connu que dans de tels dispositifs, le champ de vision de l'observateur 4 est limité par les dimensions du trou 2 de positionnement.

Bien entendu, le prisme rhomboèdre peut être remplacé par tout système optique équivalent, sans que cela ne modifie ce type de contrainte.

Dans l'ensemble de ce texte, on entend par "prisme rhomboèdre", un tel prisme ou tout système lui étant équivalent.

Sur la Figure 2, un épiscope de nuit 6 est composé d'un tube intensificateur de lumière 7 comportant une face d'entrée 8 et un écran 9. Un objectif coudé 10 forme l'image du paysage dans la direction 11 sur la face d'entrée 8 du tube intensificateur de lumière, et un objectif coudé 12 produit l'image destinée à l'observateur 13. Cet épiscope traverse le blindage 14 par le trou 15 dont les dimensions conditionnent celles de son champ.

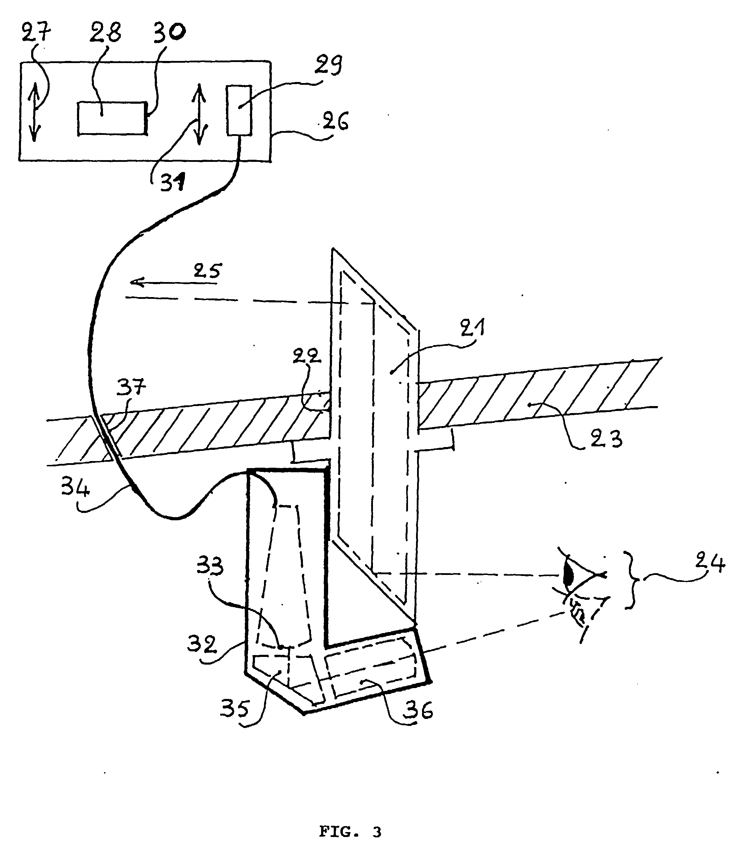

L'épiscope jour-nuit, réalisé selon l'invention et représenté sur la Figure 3, comporte un prisme rhomboèdre traversant par un trou 22 le blindage 23 et permet au conducteur 24 d'observer le paysage dans la direction 25.

Un module de prise de vue 26, extérieur au blindage 23, comporte un objectif 27, un tube intensificateur de lumière 28, une matrice de capteur de lecture 29 couplée à la face image 30 du tube intensificateur de lumière par un système optique 31.

Un module de visualisation 32 comporte un écran de visualisation 33, relié au module de prise de vue 26 par le câble électrique 34, et un objectif coudé 35, 36 rejetant à l'infini l'image formée par l'écran de visualisation 33 et permettant son observation par le conducteur 24, depuis la même position que celle permettant l'observation à travers l'épiscope de jour 21.

Le câble électrique 34 de liaison entre le module de prise de vue et le module de visualisation traverse le blindage 23 par un passage 37.

Ainsi, le champ de vision, au travers de l'épiscope de jour, est limité par l'ouverture 22 du blindage 23, alors que le champ de l'épiscope de nuit, dépendant des caractéristiques du module de prise de vue 26, est indépendant de la dimension d'un passage au travers du blindage, le passage 37 destiné uniquement à un câble électrique étant de dimension très limitée.

Cet épiscope jour-nuit permet donc la visualisation traditionnelle de jour et lui conserve son confort et sa résistance et son champ, et apporte la possibilité d'une vision de bonne qualité la nuit à partir du même poste d'observation du conducteur. L'épiscope de jour traditionnel équipant des chars anciens peut être modifié. Un module de prise de vue 26 et un module de visualisation 32 lui étant adjoint et ne nécessitant le percement du blindage 23 que pour assurer le passage du câble électrique de liaison 34.

Selon le degré d'équipement recherché pour le char, le module de prise de vue 26 peut être perfectionné, de façon à ce qu'il incorpore d'autres systèmes de prise de vue aptes à former des images convertissables sous forme de signaux électriques et qu'il est donc possible de transmettre par le câble électrique 34. En particulier, le module de prise de vue 26 peut comporter une caméra infrarouge thermique et une caméra de jour. La caméra infrarouge thermique peut être utilisée de jour comme de nuit.

Ces différents dispositifs d'acquisition d'image compris dans le module de prise de vue peuvent être équipés de systèmes optiques permettant d'améliorer leurs performances, tels que les objectifs multifocale ou à focales variables, les dispositifs de rotation....

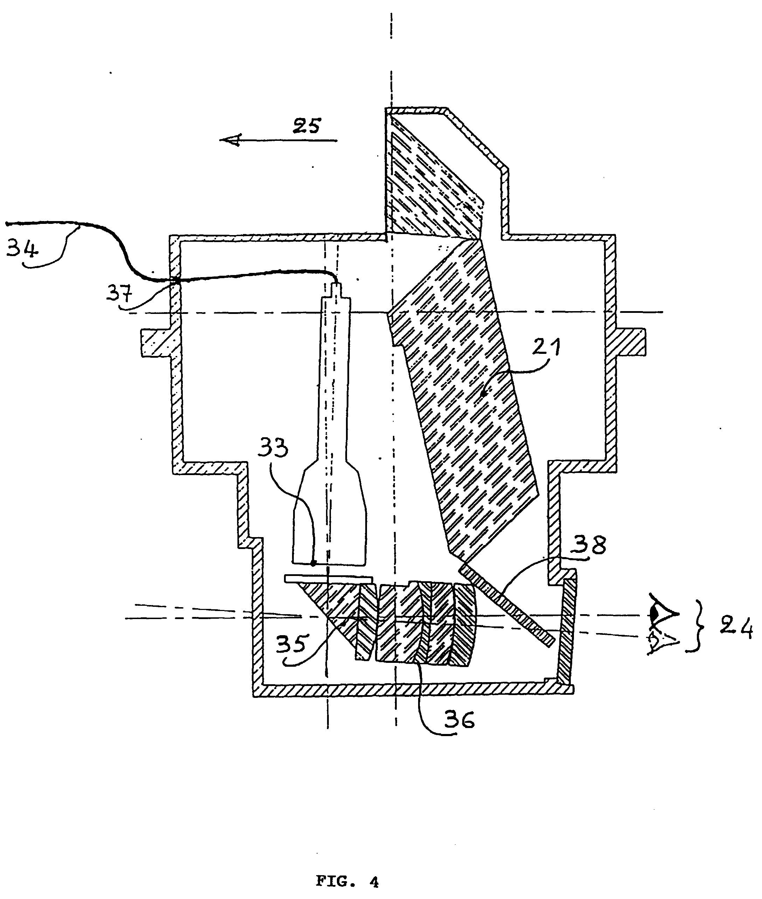

Pour permettre au conducteur l'observation du paysage dans des conditions de positionnement de sa tête identiques, qu'il travaille avec l'épiscope de jour ou avec l'épiscope de nuit, les images formées par l'un et l'autre peuvent être superposées par une lame semi-transparente 38, telle que représentée sur la Figure 4.

Sur cette Figure 4, les éléments communs à la réalisation de la Figure 3 ont été représentés avec les mêmes références.

La superposition de ces images peut également être réalisée par l'intermédiaire d'un miroir basculant, ce qui permet une observation sans perte de flux lumineux.

L'image fournie par le module de prise de vue peut être distribuée vers d'autres postes que le poste de conducteur par l'intermédiaire d'un boîtier modulaire intermédiaire, par exemple vers le chef de char. Ces images peuvent faire l'objet de différents traitements informatiques et peuvent également être transmises, à l'extérieur, à d'autres chars ou au poste de commandement.

Les signes de référence insérés après les caractéristiques techniques mentionnées dans les revendications, ont pour seul but de faciliter la compréhension de ces dernières, et n'en limitent aucunement la portée.

## Revendications

1. Episcope jour-nuit de conduite d'un char comportant un blindage (23), composé d'un épiscope de jour (21) comportant un prisme destiné à traverser le blindage (23), et d'un épiscope de nuit comportant un module de prise de vue (26), extérieur au blindage (23), et un module de visualisation (32), intérieur au blindage (23), reliés par un câble électrique (34) de liaison, caractérisé en ce que ledit prisme est un prisme rhomboèdre, l'épicospe de nuit comporte un tube intensificateur de lumière (28) et le module de visualisation (32) de l'épiscope de nuit est au voisinage du viseur de l'épiscope de jour (21), ces deux épiscopes pouvant être utilisés par un conducteur (24), sans changement de la position de sa tête.

2. Episcope jour-nuit selon la revendication 1, caractérisé en ce que le module de visualisation (32) de l'épiscope de nuit comporte un tube vertical formant une image à l'infini dans une direction (25) approximativement horizontale, au moyen d'un système optique (31) comprenant un prisme (35).

3. Episcope jour-nuit selon l'une des revendications 1 ou 2, caractérisé en ce qu'il comprend une lame semi-transparente (38) superposant les images formées, respectivement par l'épiscope de jour (21) et par l'épiscope de nuit.

4. Episcope jour-nuit selon l'une quelconque des revendications 1 ou 2, caractérisé en ce qu'il comprend un miroir basculant permettant, selon sa position, l'observation par le conducteur (24), soit de l'image formée par l'épiscope de jour (21), soit de l'image formée par l'épiscope de nuit.

5. Episcope jour-nuit selon l'une quelconque des revendications 1 à 4, caractérisé en ce que le module de prise de vue (26) de l'épiscope de nuit comporte en outre une caméra thermique extérieure au blindage (23) et reliée au module de visualisation (32) par un câble électrique (34).

6. Episcope jour-nuit selon l'une quelconque des revendications 1 à 5, caractérisé en ce que le module de prise de vue (26) est équipé d'un objectif (27) à focale variable.

7. Episcope jour-nuit selon l'une quelconque des revendications 1 à 6, caractérisé en ce que plusieurs modules de visualisation sont reliés au module de prise de vue (26).

8. Episcope jour-nuit selon l'une quelconque des revendications 1 à 7, caractérisé en ce qu'un module de commande permet d'actionner le module de prise de vue (26) depuis le module de visualisation (32).

## Patentansprüche

1. Tages-/Nacht-Episkop für den Fahrbetrieb eines mit einer Panzerung (23) versehenen Panzers, mit einem Tages-Episkop (21), das ein durch die Panzerung (23) hindurchführbares Prisma aufweist, und einem Nacht-Episkop, das ein außerhalb der Panzerung (23) angeordnetes Sichtaufnahme-Modul (26) und ein innerhalb der Panzerung (23) angeordnetes Sichtdarstellungsmodul (32) aufweist, die durch ein elektrisches Verbindungskabel (34) miteinander verbunden sind,
dadurch gekennzeichnet, daß das Prisma ein rhomboedrisches Prisma ist, das Nacht-Episkop eine Lichtverstärkerröhre (28) aufweist und das Sichtdarstellungsmodul (32) des Nacht-Episkops nahe an dem Visier des Tages-Episkops (21) angeordnet ist, wobei die beiden Episkope von dem Fahrer (24) verwendet werden können, ohne daß dieser seine Kopfposition verändert.

2. Tages-/Nacht-Episkop nach Anspruch 1, dadurch gekennzeichnet, daß das Sichtdarstellungsmodul (32) des Nacht-Episkops eine vertikale Röhre aufweist, die mittels eines ein Prisma (35) aufweisenden optischen Systems (31) in einer im wesentlichen horizontalen Richtung (25) ein Bild im Unendlichen erzeugt.

3. Tages-/Nacht-Episkop nach Anspruch 1 oder 2, gekennzeichnet durch eine halbdurchlässige Lamelle (38), die die durch das Tages-Episkop (21) bzw. das Nacht-Episkop erzeugten Bilder einander überlagert.

4. Tages-/Nacht-Episkop nach Anspruch 1 oder 2, gekennzeichnet durch einen kippbaren Spiegel, der je nach seiner Position dem Fahrer (24) die Betrachtung des durch das Tages-Episkop (21) erzeugten Bildes bzw. des durch das Nacht-Episkop erzeugten Bildes ermöglicht.

5. Tages-/Nacht-Episkop nach einem der Ansprüche 1 bis 4, dadurch gekennzeichnet, daß das Sichtaufnahme-Modul (26) des Nacht-Episkops ferner eine Wärmebildkamera aufweist, die außerhalb der Panzerung (23) angeordnet ist und durch eine elektrische Leitung (34) mit dem Sichtdarstellungsmodul (32) verbunden ist.

6. Tages-/Nacht-Episkop nach einem der Ansprüche 1 bis 5, dadurch gekennzeichnet, daß das Sichtaufnahme-Modul (26) ein Objektiv (27) mit variabler Brennweite aufweist.

7. Tages-/Nacht-Episkop nach einem der Ansprüche 1 bis 6, dadurch gekennzeichnet, daß mehrere Sichtdarstellungsmoduln mit dem Sichtaufnahme-Modul (26) verbunden sind.

8. Tages-/Nacht-Episkop nach einem der Ansprüche 1 bis 7, dadurch gekennzeichnet, daß ein Steuermodul ein Betätigen des Sichtaufnahme-Moduls (26) vom Sichtdarstellungsmodul (32) aus ermöglicht.

## Claims

1. A day and night episcope for driving a tank comprising an armouring (23), consisting of a day-time episcope (21) fitted with a prism designed for traversing the armouring (23), and of a night-time episcope fitted with a camera module (26), outside the armouring (23) and fitted with a visualisation module (32), inside the armouring (23), connected by an electrical linking cable (34), characterised in that the said prism is a rhombohedral prism, the night-time episcope comprises a light-intensifying tube (28) and the visualisation module (32) of the night-time episcope is in the vicinity of the collimator of the daytime episcope (21), both these episcopes being liable to be used by a driver (24), without changing the position of his head.

2. A day and night episcope according to claim 1, characterised in that the visualisation module (32) of the night-time episcope comprises a vertical tube forming an infinite picture in a direction (25) approximately horizontal, with an optical system (31) fitted with a prism (35).

3. A day and night episcope according to one of claims 1 or 2, characterised in that it comprises a semi-transparent blade (38) superimposing the pictures which have been formed, respectively, by the day-time episcope (21) and by the night-time episcope.

4. A day and night episcope according to any one of claims 1 or 2, characterised in that it comprises a tilting mirror which, according to its position, enables the driver (24) to observe either the picture formed by the day-time episcope (21) or the picture formed by the night-time episcope.

5. A day and night episcope according to any one of claims 1 to 4, characterised in that the camera module (26) of the night-time episcope comprises moreover a thermal camera, outside the armouring (23) and connected to the visualisation module (32) by an electric cable (34).

6. A day and night episcope according to any one of claims 1 to 5, characterised in that the camera module (26) is fitted with a variable focus lens (27).

7. A day and night episcope according to any one of claims 1 to 6, characterised in that several visualisation modules are connected to the camera module (26).

8. A day and night episcope according to any one of claims 1 to 7, characterised in that a control module enables to actuate the camera module (26) from the visualisation module (32).
